# EUROPÄISCHE PATENTSCHRIFT

(11) **EP 2 566 787 B1**
(45) Veröffentlichungstag und Bekanntmachung des Hinweises auf die Patenterteilung: **30.03.2016**
(21) Anmeldenummer: 11719239.3
(22) Anmeldetag: 06.05.2011
(51) Int. Cl.: B65G 1/04, B65G 54/02, G01N 35/04

(54) **LABORANALYSESYSTEM**
LABORATORY ANALYSIS SYSTEM
SYSTÈME D'ANALYSE DE LABORATOIRE

(30) Priorität: 07.05.2010 DE 102010028769
(43) Veröffentlichungstag der Anmeldung: 13.03.2013
(60) Teilanmeldung: 16153933.3
(73) Patentinhaber: F.Hoffmann-La Roche AG, 4070 Basel (CH); Roche Diagnostics GmbH, 68305 Mannheim (DE)
(72) Erfinder: TEODORESCU, George, 71332 Waiblingen (DE); HEISE, Michael, 71672 Marbach (DE)
(74) Vertreter: Patentanwälte Ruff, Wilhelm, Beier, Dauster & Partner mbB
(86) Internationale Anmeldenummer: PCT/EP2011/057344
(87) Internationale Veröffentlichungsnummer: WO 2011/138448

(56) Entgegenhaltungen:
- EP-A1- 0 601 213
- EP-A1- 0 775 650
- EP-A1- 0 775 650
- WO-A1-2007/024540
- WO-A2-03/042048
- DE-A1-102007 025 822
- US-A- 3 273 727
- US-A- 3 653 485
- US-A1- 2005 196 320

## Beschreibung

Die DE 10 2007 025 822 A1 zeigt kombinierbare Flächenelemente und eine Vielzahl von ansteuerbaren Wandlerelementen, wobei die Flächenelemente zur Bildung einer Fläche kombinierbar sind. Die Flächenelemente weisen nebeneinander angeordnete Wandlerelemente auf, die derart ansteuerbar sind, dass eine über die Wandlerelemente erzeugte Kraft eine Kraftfeldgestaltung des Flächenelements wenigstens in einem Teilbereich des Flächenelements verändert.

Die EP 0 601 213 A1 zeigt ein Laboranalysesystem mit mittels einer Steuereinheit gesteuertem System zum Transportieren von Behälterträgern zwischen unterschiedlichen Stationen.

### Aufgabe und Lösung

Der Erfindung liegt die Aufgabe zugrunde, ein Laboranalysesystem zur Verfügung zu stellen, das eine hohe Transportleistung bei gleichzeitig großer Flexibilität bereitstellt, um beispielsweise bestimmte Behälter bevorzugt zwischen unterschiedlichen Stationen des Laboranalysesystems zu transportieren.

Die Erfindung löst diese Aufgabe durch ein Laboranalysesystem mit den Merkmalen des Anspruchs 1.

Bevorzugte Ausführungsformen sind Gegenstand der Unteransprüchep.

Das Laboranalysesystem umfasst ein System zum Transportieren von Behältern zwischen unterschiedlichen Stationen des Laboranalysesystems.

Bei dem System zum Transportieren der Behälter zwischen den unterschiedlichen Stationen sind die Behälter, beispielsweise Probenbehälter eines Laboranalysesystems, in Behälterträgern aufgenommen, indem sie beispielsweise in eine Öffnung des Behälterträgers eingesteckt sind. Das System umfasst eine Steuereinheit, die den Transport der Behälterträger steuert, beispielsweise in Form eines herkömmlichen PCs. Weiter ist eine, insbesondere ebene und horizontale, Transportfläche bzw. 2D-Fläche vorgesehen, die in funktionale Teilflächen unterteilt ist. Die Transportfläche kann beispielsweise rechteckig sein oder eine andere Form aufweisen. Auf der Transportfläche sind die Behälterträger frei beweglich anordenbar. Die Stationen können angrenzend an die Transportfläche oder oberhalb der Transportfläche angeordnet sein. Teilflächen, die an Stationen angrenzen, können als Übergabeflächen zu den Stationen dienen. Das System umfasst weiter Antriebsmittel, die durch die Steuereinheit angesteuert sind, wobei einer jeweiligen Teilfläche ein jeweiliges Antriebsmittel, insbesondere genau ein Antriebsmittel aus der Menge an Antriebsmitteln, zugeordnet ist. Die Antriebsmittel sind dazu ausgebildet, einen zugehörigen Behälterträger, d.h. einen Behälterträger, der sich beispielsweise auf einer Teilfläche, dem das Antriebsmittel zugeordnet ist, oder einer benachbarten Teilfläche bzw. in einem Ansprechbereich des Antriebsmittels befindet, mit einer Antriebskraft in Transportflächenebenenrichtung zu beaufschlagen. Die Aufteilung der Transportfläche in Teilflächen mit jeweils eigenen Antriebsmitteln führt zu einer hohen Zahl an Bewegungsfreiheitsgraden der Behälterträger, d.h. die Behälterträger können, abgesehen von unzulässigen Kollisionen, frei bzw. teilflächengranular auf der Transportfläche bewegt werden. Dies ermöglicht beispielsweise behälterträgerindividuelle Pfade und somit beispielsweise einen beschleunigten Transport bestimmter Behälter bzw. Behälterträger zwischen den Stationen.

In einer Weiterbildung ist ein jeweiliges Antriebsmittel dazu ausgebildet, einen zugehörigen Behälterträger berührungslos, d.h. ohne unmittelbaren mechanischen Kontakt zwischen Antriebsmittel und Behälterträger, mit der Antriebskraft zu beaufschlagen.

In einer Weiterbildung ist ein jeweiliges Antriebsmittel dazu ausgebildet, die Antriebskraft alternativ in einer ersten, einer zweiten, einer dritten oder einer vierten Richtung zu erzeugen, wobei sich die Richtungen jeweils unterscheiden. Bevorzugt ist die zweite Richtung senkrecht zur ersten Richtung, die dritte Richtung entgegengesetzt zur ersten Richtung und die vierte Richtung entgegengesetzt zur zweiten Richtung. Die Richtungen, d.h. die Antriebskraftvektoren, liegen bevorzugt in einer Ebene, die parallel zu einer Transportflächenebene ist.

In einer Weiterbildung umfasst die Transportfläche mindestens einen Transportflächenbereich, der in, insbesondere rechtwinklige, Rasterflächen identischer Größe unterteilt ist, wobei die Rasterflächen zumindest teilweise die Teilflächen bilden. Bevorzugt umfasst die Transportfläche mehrere Transportflächenbereiche, wobei ein jeweiliger Transportflächenbereich in Rasterflächen gleicher Größe unterteilt ist, wobei sich die Größen der Rasterflächen unterschiedlicher Transportflächenbereiche unterscheiden. Dies ermöglicht beispielsweise einen schnellen Transport der Behälterträger in Transportflächenbereichen mit gröber gerasterten, d.h. größeren, Teilflächen und eine höhere Positioniergenauigkeit in Transportflächenbereichen mit feiner gerasterten, d.h. kleineren, Teilflächen.

In einer Weiterbildung umfassen die Behälterträger magnetisches bzw. ferromagnetisches Material, mit dauerhafter oder nicht dauerhafter Magnetisierung, wobei die Antriebsmittel dazu ausgebildet sind, ein veränderliches Magnetfeld zu erzeugen, um einen zugehörigen Behälterträger berührungslos mit der Antriebskraft zu beaufschlagen.

In einer Weiterbildung umfasst ein jeweiliges Antriebsmittel vier Spulen, insbesondere ohne ferromagnetischen Kern, zur Erzeugung eines Magnetfelds. Bevorzugt beaufschlagt die Steuereinheit jeweils zwei der vier Spulen gleichzeitig mit einem Strom, um die Antriebskraft bzw. ein geeignetes Magnetfeld zu erzeugen. Bevorzugt sind die Spulen derart angeordnet, dass ihre Wicklungsachsen ein Parallelogramm bilden, insbesondere ein Rechteck, besonders bevorzugt ein Quadrat, wobei das Parallelogramm in einer Ebene liegt, die parallel zur Transportflächenebene ist.

In einer Weiterbildung sind die Antriebsmittel dazu ausgebildet, einen zugehörigen Behälterträger mittels Druckluft mit der Antriebskraft zu beaufschlagen.

In einer Weiterbildung sind die Antriebsmittel unterhalb der Transportfläche angeordnet.

In einer Weiterbildung sind die Behälter und/oder die Behälterträger mit passiven oder aktiven (RFID-) Transpondern versehen, wobei das System mindestens ein Transponder-Lesegerät umfasst, das dazu ausgebildet ist, eine Identifikation des Behälters und/oder des Behälterträgers sowie eine Positionsbestimmung des Behälters und/oder des Behälterträgers auf der Transportfläche durchzuführen.

In einer Weiterbildung umfasst das System Mittel zum Erzeugen eines Luftkissens auf der Transportfläche, um eine möglichst reibungsfreie Bewegung der Behälterträger auf der Transportfläche zu ermöglichen.

### Kurzbeschreibung der Zeichnungen

Vorteilhafte Ausführungsformen der Erfindung sind in den Zeichnungen schematisch dargestellt und werden nachfolgend beschrieben. Hierbei zeigt:
Fig. 1 eine perspektivische Ansicht eines Systems zum Transportieren von Behältern zwischen unterschiedlichen Stationen,
Fig. 2 eine seitliche Ansicht eines Ausschnitts des in Fig. 1 gezeigten Systems und
Fig. 3 eine schematische Draufsicht auf eine Teilfläche und ein zugehöriges Antriebsmittel der in Fig. 1 und 2 gezeigten Systeme.

### Detaillierte Beschreibung der Zeichnungen

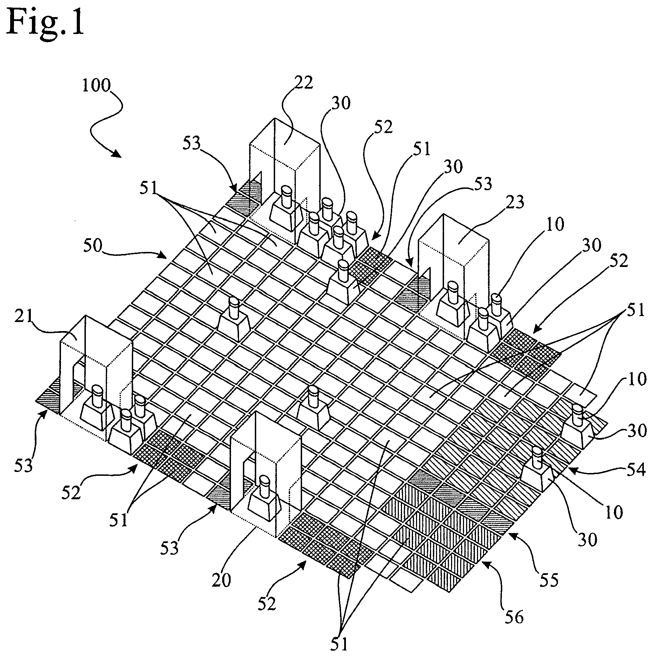

Fig. 1 zeigt eine schematische, perspektivische Ansicht eines Systems 100 zum Transportieren von Behältern 10 zwischen unterschiedlichen Stationen 20, 21, 22 und 23.

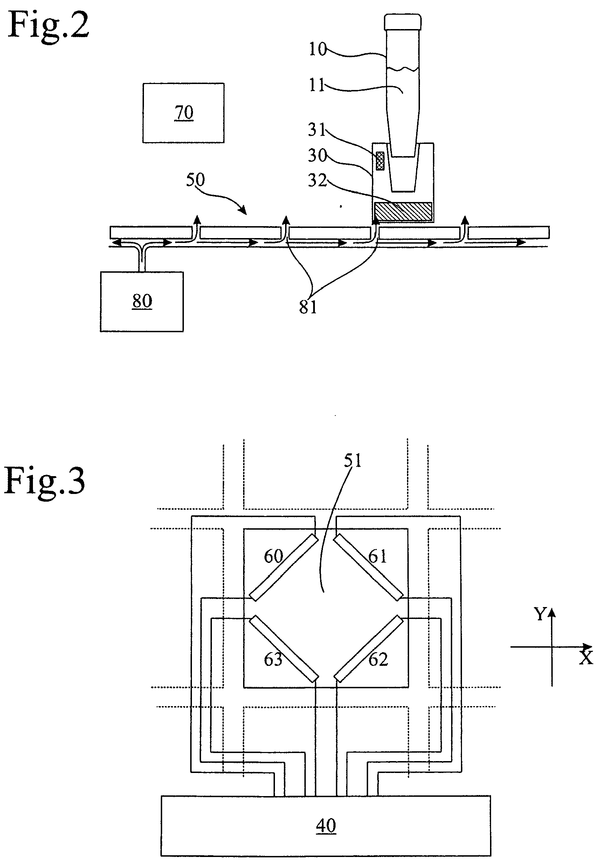

Die Stationen 20 bis 23 können verschiedene Stationen eines Probenanalysesystems für medizinische Proben sein. Zu analysierende Proben, beispielsweise Körperflüssigkeiten 11 (siehe Fig. 2) wie Blut oder Urin, werden hierbei in den Behältern in Form von mit Stöpseln verschlossenen Probenröhrchen 10 extern bereitgestellt, die in antriebsfreien Behälterträgern 30 aufgenommen sind. Die Stationen 20 bis 23 erfüllen hierbei die in diesem Zusammenhang üblicherweise anfallenden Funktionen. Beispielsweise kann eine Station zum Entstöpseln der Probenröhrchen dienen, eine weitere Station kann zum Aliquotieren dienen, eine weitere Station kann eine erste Probenanalyse durchführen usw.

Aufgabe des gezeigten Systems 100 ist das Transportieren der Probenröhrchen 10 zwischen den unterschiedlichen Stationen 20 bis 23. Die Behälter bzw. Probenröhrchen 10 werden zunächst jeweils mit dem zugehörigen Behälterträger 30 manuell oder maschinell in einem aus Teilflächen 51 gebildeten Eingabebereich 54 der Transportfläche 50 angeordnet. Vom Eingabebereich 54 werden die Probenröhrchen 10 bzw. die Behälterträger 30 mittels des Systems 100 zu den Stationen 20 bis 23 transportiert, dort entsprechend bearbeitet und anschließend zu einem aus Teilflächen 51 gebildeten Ausgabebereich 56 transportiert, von wo aus sie manuell oder maschinell von der Transportfläche 50 entnommen werden.

Zur priorisierten Bearbeitung von Notfallproben, die innerhalb einer vorgegebenen Maximalzeit zu analysieren sind, gibt es einen aus Teilflächen 51 gebildeten Notfall-Eingabebereich 55, auf dem Probenröhrchen 10 mit zugehörigem Behälterträger 30 angeordnet werden, die priorisiert zu bearbeiten sind.

Das System umfasst eine Steuereinheit 40 (siehe Fig. 3), beispielsweise in Form eines PCs als Prozessrechner, die bzw. der den Transport der Behälterträger 30 steuert, die Transportfläche 50, die rasterförmig in quadratische Teil- bzw. Rasterflächen 51 identischer Größe unterteilt ist und auf der die Behälterträger 30 beweglich anordenbar sind, und eine Mehrzahl von Antriebsmitteln, wobei einer jeweiligen Teilfläche 51 ein jeweiliges Antriebsmittel der Mehrzahl von Antriebsmittel zugeordnet ist, wobei ein jeweiliges Antriebsmittel dazu ausgebildet ist, einen zugehörigen Behälterträger 30 mit einer Antriebskraft zu beaufschlagen. Die Transportfläche 50 ist vollständig in Teilflächen 51 aufgeteilt, wobei aus Gründen der Darstellbarkeit lediglich exemplarische Teilflächen mit dem Bezugszeichen 51 versehen sind.

Fig. 3 zeigt eine schematische Draufsicht auf eine exemplarische Teilfläche 51 und ein zugehöriges Antriebsmittel. Bezugnehmend auf Fig. 3 sind unterhalb der exemplarischen Teilfläche 51 vier Spulen 60 bis 63 ohne ferromagnetischen Kern angeordnet, die das zugeordnete Antriebsmittel der exemplarischen Teilfläche 51 bilden. Die Spulen 60 bis 63 sind derart angeordnet, dass ihre Wicklungsachsen ein Quadrat bilden, wobei das Quadrat in einer Ebene liegt, die parallel zur Transportfläche 50 bzw. einer durch die Transportfläche 50 gebildeten Transportflächenebene ist. Den weiteren Teilflächen 51 sind entsprechende Antriebsmittel bzw. Spulen zugeordnet.

Die Steuereinheit 40 beaufschlagt jeweils zwei der vier Spulen 60 bis 63 mit einem Strom, um ein Magnetfeld bzw. eine Antriebskraft zu erzeugen.

Bezugnehmend auf Fig. 2 umfasst der Behälterträger 30 an seiner Unterseite Abschnitte aus ferromagnetischen Material 31 bzw. einen Permanentmagneten, wodurch aufgrund des mittels der Spulen 60 bis 63 erzeugten Magnetfelds der Behälterträger 30 mit der Antriebskraft berührungslos beaufschlagt wird.

Durch geeignete Bestromung der Spulen 60 bis 63 wird das Magnetfeld bzw. die Antriebskraft in einer ersten, einer zweiten, einer dritten oder mindestens einer vierten Richtung erzeugt. Ein gleichzeitig bestromtes Spulenpaar bilden beispielsweise die Spulen (60, 63), (62, 63), (61, 62) und (60, 61), wobei die Richtung der Antriebskraft durch Umpolen der Bestromung invertierbar ist.

Ein Behälterträger 30 kann beispielsweise mittels einer geeignet erzeugten Antriebskraft von der Teilfläche 51 geschoben und/oder von einer Antriebskraft, die geeignet von einem Antriebsmittel einer benachbarten Teilfläche erzeugt wird, zu der benachbarten Teilfläche gezogen werden. An der Bewegung bzw. dem Antrieb eines Behälterträgers 30 kann lediglich ein einzelnes Antriebsmittel einer einzelnen Teilfläche beteiligt sein oder es können mehrere Antriebsmittel mehrerer Teilflächen beteiligt sein. Die Antriebsmittel können gleichzeitig auch zum Abbremsen und/oder Fixieren der Behälterträger 30 dienen.

Aus Teilflächen 51 gebildete Teilflächenbereiche 52, die an die Stationen 20 bis 23 angrenzen, dienen als Übergabeflächen zu den Stationen, d.h. als Warteschlangen. Aus Teilflächen 51 gebildete Teilflächenbereiche 53, die an einer anderen Seite an die Stationen 20 bis 23 angrenzen, dienen als priorisierte Übergabeflächen zu den Stationen, beispielsweise als Warteschlangen für Notfallproben.

Sämtliche funktionalen Teilflächenbereiche 52, 53, 54, 55 und 56 sind aus einer vorgegebenen Anzahl von Teilflächen 51 gebildet.

Fig. 2 zeigt eine seitliche Ansicht eines Ausschnitts des in Fig. 1 gezeigten Systems 100.

Bezugnehmend auf Fig. 2 ist ein Drucklufterzeuger 80 vorgesehen, mittels dem Druckluft erzeugt wird, die über eine geeignete Zuführung zur Transportfläche 50 geführt wird, wo diese über Öffnungen 81 in der Transportfläche 50 austritt. Der Drucklufterzeuger 80 und die Öffnungen 81 dienen zum Erzeugen eines Luftkissens auf der Transportfläche 50, um eine möglichst reibungsfreie Bewegung der Behälterträger 30 auf der Transportfläche 50 zu ermöglichen. Die Öffnungen 81 sind, insbesondere gleichmäßig, über die Transportfläche 50 verteilt. Alternativ oder zusätzlich kann eine Reibungsreduzierung auch magnetisch erfolgen, wobei hierzu, insbesondere dynamisch, ein geeignetes Magnetfeld mit vertikalen Komponenten erzeugt werden kann, um einen Anpressdruck des Behälterträgers 30 auf die Transportfläche 50 zu reduzieren bzw. ein Schweben des Behälterträgers 30 zu bewirken. Eine weitere Möglichkeit zur Reibungsreduktion ist die Beschichtung der Transportfläche 50 und/oder der Unterseiten bzw. Gleitflächen der Behälterträger 30 mit einer reibungsarmen Beschichtung, beispielsweise Teflon. Die Luftkissenerzeugung kann für diesen Fall entfallen.

Die Behälterträger 30 sind jeweils mit Transpondern 32 versehen sind, wobei das System 100 mindestens ein Transponder-Lesegerät 70 umfasst, das dazu dient, eine Identifikation des Behälterträgers 30 und eine Positionsbestimmung des Behälterträgers 30 auf der Transportfläche 50 durchzuführen. Wenn beispielsweise mindestens drei Transponder-Lesegeräte 70 im System 100 enthalten sind, kann eine Positionsbestimmung mittels Triangulation erfolgen.

Bei dem gezeigten System 100 umfasst die Transportfläche 50 genau einen Transportflächenbereich, der mit der Transportfläche 50 identisch und der in Rasterflächen gleicher Größe unterteilt ist, wobei die Rasterflächen die Teilflächen 51 bilden. Alternativ kann die Transportfläche 50 mehrere Transportflächenbereiche umfassen, wobei ein jeweiliger Transportflächenbereich in Rasterflächen gleicher Größe unterteilt ist, wobei sich die Größen der Rasterflächen unterschiedlicher Transportflächenbereiche unterscheiden. Dies ermöglicht beispielsweise einen schnellen Transport der Behälterträger 30 in Transportflächenbereichen mit gröber gerasterten, d.h. größeren, Teilflächen 51 und eine höhere Positioniergenauigkeit in Transportflächenbereichen mit feiner gerasterten, d.h. kleineren, Teilflächen 51.

Bei den gezeigten Ausführungsformen deckt ein Behälterträger 30 mit seiner der Transportfläche 50 zugewandten Unterseite eine Teilfläche 51 im Wesentlichen vollständig ab. Es versteht sich, dass, insbesondere bei Teilflächen 51 unterschiedlicher Größe, die Unterseite des Behälterträgers 30 auch mehrere Teilflächen abdecken kann, wobei für diesen Fall die Antriebsmittel mehrerer Teilflächen 51 jeweilige Antriebskraftbeiträge erzeugen können, die sich zu einer resultierenden Antriebskraft überlagern

Bei den gezeigten Ausführungsformen wird die Antriebskraft elektromagnetisch erzeugt. Alternativ oder zusätzlich ist es möglich, einen Behälterträger 30 mittels Druckluft zur Erzeugung der Antriebskraft zu beaufschlagen.

## Patentansprüche

1. Laboranalysesystem, mit
- Behältern (10) zur Aufnahme von zu analysierenden Proben,
- Behälterträgern (30) zur Aufnahme der Behälter (10),
- unterschiedlichen Stationen (20∼23) und
- einem System (100) zum Transportieren der Behälterträger (30) zwischen den unterschiedlichen Stationen (20∼23), mit:
- einer Steuereinheit (40), die den Transport der Behälterträger (30) steuert,
- einer Transportfläche (50),
- die in Teilflächen (51) unterteilt ist, wobei Teilflächen (51), die an Stationen angrenzen, als Übergabeflächen zu den Stationen dienen, wobei ein aus Teilflächen (51) gebildeter Notfall-Eingabebereich (55) vorgesehen ist, auf dem Probenbehälter (10) mit zugehörigem Behälterträger (30) zur priorisierten Bearbeitung von Notfallproben anordenbar sind, und
- auf der die Behälterträger (30) beweglich anordenbar sind, und
- Antriebsmitteln (60∼63), wobei
- die Antriebsmittel (60∼63) durch die Steuereinheit (40) angesteuert sind und
- einer jeweiligen Teilfläche (51) ein jeweiliges Antriebsmittel (60∼63) zugeordnet ist, wobei
- ein jeweiliges Antriebsmittel (60∼63) dazu ausgebildet ist, einen zugehörigen Behälterträger (30) mit einer Antriebskraft zu beaufschlagen.

2. Laboranalysesystem nach Anspruch 1, **dadurch gekennzeichnet, dass** ein jeweiliges Antriebsmittel (60∼63) dazu ausgebildet ist, einen zugehörigen Behälterträger (30) berührungslos mit der Antriebskraft zu beaufschlagen.

3. Laboranalysesystem nach Anspruch 1 oder 2, **dadurch gekennzeichnet, dass** ein jeweiliges Antriebsmittel (60∼63) dazu ausgebildet ist, die Antriebskraft alternativ in einer ersten, einer zweiten, einer dritten oder einer vierten Richtung zu erzeugen.

4. Laboranalysesystem nach einem der vorhergehenden Ansprüche, **dadurch gekennzeichnet, dass**
- die Transportfläche (50) mindestens einen Transportflächenbereich umfasst, der in Rasterflächen gleicher Größe unterteilt ist, wobei die Rasterflächen zumindest teilweise die Teilflächen (51) bilden.

5. Laboranalysesystem nach Anspruch 4, **dadurch gekennzeichnet, dass**
- die Transportfläche (50) mehrere Transportflächenbereiche umfasst, wobei ein jeweiliger Transportflächenbereich in Rasterflächen gleicher Größe unterteilt ist, wobei sich die Größen der Rasterflächen unterschiedlicher Transportflächenbereiche unterscheiden.

6. Laboranalysesystem nach einem der vorhergehenden Ansprüche, **dadurch gekennzeichnet, dass**
- die Behälterträger (30) ferromagnetisches Material (31) umfassen und
- die Antriebsmittel (60∼63) dazu ausgebildet sind, ein veränderliches Magnetfeld zu erzeugen, um einen zugehörigen Behälterträger (30) mit der Antriebskraft zu beaufschlagen.

7. Laboranalysesystem nach einem der vorhergehenden Ansprüche, **dadurch gekennzeichnet, dass**
- die Antriebsmittel dazu ausgebildet sind, einen zugehörigen Behälterträger mittels Druckluft mit der Antriebskraft zu beaufschlagen.

8. Laboranalysesystem nach einem der vorhergehenden Ansprüche, **dadurch gekennzeichnet, dass**
- die Antriebsmittel (60∼63) unterhalb der Transportfläche (50) angeordnet sind.

9. Laboranalysesystem nach einem der vorhergehenden Ansprüche, **dadurch gekennzeichnet, dass**
- die Probenbehälter (10) und/oder die Behälterträger (30) mit Transpondern (32) versehen sind,
- wobei das Laboranalysesystem mindestens ein Transponder-Lesegerät (70) umfasst, das dazu ausgebildet ist, eine Identifikation des Probenbehälters (10) und/oder des Behälterträgers (30) und/oder eine Positionsbestimmung des Probenbehälters (10) und/oder des Behälterträgers (30) auf der Transportfläche (50) durchzuführen.

10. Laboranalysesystem nach einem der vorhergehenden Ansprüche, **gekennzeichnet, durch**
- Mittel (80, 81) zum Erzeugen eines Luftkissens auf der Transportfläche (50).

11. Laboranalysesystem nach einem der vorhergehenden Ansprüche, **dadurch gekennzeichnet, dass**
- die Stationen eine Station zum Entstöpseln von Probenröhrchen, eine Station zum Aliquotieren und/oder eine Station zur Probenanalyse umfassen.
Die gezeigten Ausführungsformen ermöglichen eine hohe Transportleistung bei gleichzeitig großer Flexibilität, um beispielsweise Notfallproben bevorzugt zwischen unterschiedlichen Stationen zu transportieren.

## Claims

1. Laboratory analysis system, comprising
- containers (10) for receiving samples to be analyzed,
- container carriers (30) for receiving the containers (10),
- different stations (20-23), and
- a system (100) for transporting the container carriers (30) between the different stations (20-23), comprising:
- a control unit (40) which controls the transport of the container carriers (30),
- a transport area (50),
- which is divided into subareas (51), wherein subareas (51) adjoining to stations serve as transfer areas to the stations, wherein an emergency input region (55) composed of subareas (51) is provided, whereon sample containers (10) with associated container carriers (30) can be placed for priority treatment of emergency samples, and
- on which the container carriers (30) can be movably arranged, and
- drive means (60-63), wherein
- the drive means (60-63) are activated by the control unit (40), and
- a respective drive means (60-63) is assigned to a respective subarea (51), wherein
- a respective drive means (60-63) is designed to apply a drive force to an associated container carrier (30).

2. Laboratory analysis system according to claim 1, **characterized in that** a respective drive means (60-63) is designed to apply the drive force to an associated container carrier (30) in a contactless manner.

3. Laboratory analysis system according to claim 1 or 2, **characterized in that** a respective drive means (60-63) is designed to generate the drive force alternatively in a first, a second, a third, or a fourth direction.

4. Laboratory analysis system according to any of the preceding claims, **characterized in that**
- the transport area (50) comprises at least one transport area region, which is divided into equal-sized grid areas, wherein the grid areas at least partially form the subareas (51).

5. Laboratory analysis system according to claim 4, **characterized in that**
- the transport area (50) comprises a plurality of transport area regions, wherein a respective transport area region is divided into equal-sized grid areas, wherein the sizes of the grid areas of different transport area regions differ.

6. Laboratory analysis system according to any of the preceding claims, **characterized in that**
- the container carriers (30) comprise ferromagnetic material (31), and
- the drive means (60-63) are designed to generate a variable magnetic field in order to apply the drive force to an associated container carrier (30).

7. Laboratory analysis system according to any of the preceding claims, **characterized in that**
- the drive means are designed to apply the drive force to an associated container carrier by means of compressed air.

8. Laboratory analysis system according to any of the preceding claims, **characterized in that**
- the drive means (60-63) are disposed beneath the transport area (50).

9. Laboratory analysis system according to any of the preceding claims, **characterized in that**
- the sample containers (10) and/or the container carriers (30) are provided with transponders (32),
- wherein the laboratory analysis system comprises at least one transponder reader device (70), which is designed to perform an identification of the sample container (10) and/or of the container carrier (30) and/or a determination of position of the sample container (10) and/or of the container carrier (30) on the transport area (50).

10. Laboratory analysis system according to any of the preceding claims, **characterized by**
- means (80, 81) for generating an air cushion on the transport area (50).

11. Laboratory analysis system according to any of the preceding claims, **characterized in that**
- the stations comprise a station for removing a stopper from sample tubes, a station for aliquoting, and/or a station for sample analysis.

## Revendications

1. Système d'analyse de laboratoire, avec
- des récipients (10) destinés à contenir des échantillons à analyser,
- des supports de récipients (30) destinés à recevoir les récipients (10),
- différentes stations (20-23), et
- un système (100) destiné à transporter les supports de récipients (30) entre les différentes stations (20-23), avec:
- une unité de commande (40), qui commande le transport des supports de récipients (30),
- une surface de transport (50),
- qui est divisée en surfaces partielles (51), dans lequel des surfaces partielles (51), qui sont adjacentes à des stations, servent de surfaces de transfert vers les stations, dans lequel il est prévu une zone d'introduction d'urgence (55) formée de surfaces partielles (51), sur laquelle des récipients à échantillon (10) avec le support de récipient correspondant (30) peuvent être disposés pour le traitement prioritaire d'échantillons d'urgence, et
- sur laquelle les supports de récipients (30) peuvent être disposés de façon mobile, et
- des moyens d'entraînement (60-63), dans lequel
- les moyens d'entraînement (60-63) sont commandés par l'unité de commande (40), et
- un moyen d'entraînement respectif (60-63) est associé à une surface partielle (51) respective, dans lequel
- un moyen d'entraînement respectif (60-63) est configuré pour appliquer une force d'entraînement à un support de récipient correspondant (30).

2. Système d'analyse de laboratoire selon la revendication 1, **caractérisé en ce qu'**un moyen d'entraînement respectif (60-63) est configuré pour appliquer la force d'entraînement sans contact à un support de récipient correspondant (30).

3. Système d'analyse de laboratoire selon la revendication 1 ou 2, **caractérisé en ce qu'**un moyen d'entraînement respectif (60-63) est configuré pour produire la force d'entraînement alternativement dans une première, une deuxième, une troisième ou une quatrième direction.

4. Système d'analyse de laboratoire selon l'une quelconque des revendications précédentes, **caractérisé en ce que** la surface de transport (50) comprend au moins une zone de surface de transport, qui est divisée en surfaces de grille de même grandeur, dans lequel les surfaces de grille forment au moins en partie les surfaces partielles (51).

5. Système d'analyse de laboratoire selon la revendication 4, **caractérisé en ce que** la surface de transport (50) comprend plusieurs zones de surface de transport, dans lequel une zone de surface de transport respective est divisée en surfaces de grille de même grandeur, dans lequel les grandeurs des surfaces de grille de différentes zones de surface de transport sont différentes.

6. Système d'analyse de laboratoire selon l'une quelconque des revendications précédentes, **caractérisé en ce que**
- les supports de récipients (30) comprennent un matériau ferromagnétique (31), et
- les moyens d'entraînement (60-63) sont configurés pour produire un champ magnétique variable, afin d'appliquer la force d'entraînement à un support de récipient correspondant (30).

7. Système d'analyse de laboratoire selon l'une quelconque des revendications précédentes, **caractérisé en ce que** les moyens d'entraînement sont configurés pour appliquer la force d'entraînement à un support de récipient correspondant au moyen d'air comprimé.

8. Système d'analyse de laboratoire selon l'une quelconque des revendications précédentes, **caractérisé en ce que** les moyens d'entraînement (60-63) sont disposés en dessous de la surface de transport (50).

9. Système d'analyse de laboratoire selon l'une quelconque des revendications précédentes, **caractérisé en ce que**
- les récipients à échantillons (10) et/ou les supports de récipients (30) sont munis de transpondeurs (32),
- dans lequel le système d'analyse de laboratoire comprend au moins un appareil de lecture de transpondeur (70), qui est configuré pour opérer une identification du récipient à échantillon (10) et/ou du support de récipient (30) et/ou une détermination de position du récipient à échantillon (10) et/ou du support de récipient (30) sur la surface de transport (50).

10. Système d'analyse de laboratoire selon l'une quelconque des revendications précédentes, **caractérisé par** des moyens (80, 81) pour produire un coussin d'air sur la surface de transport (50).

11. Système d'analyse de laboratoire selon l'une quelconque des revendications précédentes, **caractérisé en ce que** les stations comprennent une station pour déboucher des éprouvettes, une station pour former des parties aliquotes et/ou une station pour analyser des échantillons.
